# EUROPEAN PATENT SPECIFICATION

(11) **EP 1 376 979 B1**
(45) Date of publication and mention of the grant of the patent: **12.04.2017**
(21) Application number: 03013252.6
(22) Date of filing: 12.06.2003
(51) Int. Cl.: H04L 29/06, H04L 12/58

(54) **System and method for signaling using instant messaging in multimedia telephony-over-LAN conferences**
System und Verfahren zur Signalisierung mit sofortige Nachrichtenübermittlung in Telefonie-über-LAN Multimediakonferenzen
Système et méthode de signalisation utilisant une messagerie instantanée pour des conférences multimédia de téléphonie-sur-lan

(30) Priority: 17.06.2002 US 174261
(43) Date of publication of application: 02.01.2004
(73) Proprietor: Unify Inc., Boca Raton, Florida 33487 (US)
(72) Inventor: Crouch, Richard, Gustine, CA 95322 (US); Beyda, William J., Cupertino, CA 95014 (US); Caspi, Rami, Sunnyvale, CA 94087 (US)
(74) Representative: Fritzsche, Thomas

(56) References cited:
- US-A1- 2002 023 131
- US-A1- 2002 062 345
- US-A1- 2002 071 540
- US-B1- 6 493 324
- US-B1- 6 629 129

## Description

### BACKGROUND OF THE INVENTION

### FIELD OF THE INVENTION

The present invention relates to telecommunications devices and, in particular, to an improved system and method for multimedia telephony-over-LAN conferences.

### DESCRIPTION OF THE RELATED ART

An effective and user-friendly way to conduct multimedia audio and/or video teleconferences has long been sought. The promulgation of the H.323 Recommendation and the Session Initiation Protocol (SIP), as well as other multimedia packet protocols, have raised hopes that multimedia audio and video conferencing may yet reach their full potentials. Typically, to teleconference using such systems, users must log in to a teleconferencing server, identify themselves as authorized parties, and be scheduled for the conference.

Instant Messaging (IM) allows users to log in to an Instant Messaging server and conduct a text-based "chat" session with groups associated with a user's "buddy" lists. Typically, a user logs in to the server, identifies themselves as being present, uploads a "buddy" list, and then is invited to chat with those on the buddy list.

Telephony systems and instant messaging systems both have advantages and circumstances of use in which one or the other might be more desirable. Typically, telephony systems and instant messaging systems are discrete systems requiring users to learn different sets of procedures for effective usage of each. Further, such systems do not typically allow for cross-system interaction.

US 2002/0023131 A1 discloses a voice instant messaging communication between a sender an at least one recipient through an instant messaging host.

US 2002/0062345 A1 discloses a thin instant messaging proxy interface with persistent sessions for initiating a communications channel between at least a first and second instant messaging users.

For example, while a user could establish an instant messaging session with a party while in the middle of a teleconference with that party, the instant messaging session would be wholly independent of the teleconference. US 2002/0071540 discloses the use of an Instant Messaging Service to notify users of a teleconference operated independently.

As such, there is a need for a telecommunications system having a greater integration of instant messaging and teleconferencing. There is a still further need for such a system to have a relatively high level of ease of use.

### SUMMARY OF THE INVENTION

These and other problems in the prior art are overcome by a telecommunications method according to claim 1 and a telecommunications device according to claim 5 and a telecommunications system according to claim 9.

A telecommunications system according to an embodiment of the present invention includes a packet network; a plurality of network clients operably coupled to the packet network, the network clients including a plurality of telephony clients and an associated plurality of Instant Messaging clients. Signaling for the telephony clients is adapted to be provided by the Instant Messaging clients using Instant Messaging channels.

The Instant Messaging channels carry the telephony call set up and signaling. Applications such as whiteboarding use the Instant Messaging channels in some embodiments.

A telecommunications method according to an embodiment of the present invention comprises establishing an instant messaging session among a plurality of users; and using an instant messaging channel of the instant messaging session to establish a multimedia over IP session among the users. In certain embodiments, the multimedia over IP session comprises
a whiteboarding session during a pre-established multimedia session. Sending the whiteboarding session comprises sending a whiteboarding document in a chat window of the instant messaging session and identifying the whiteboarding document as a whiteboarding document and including size and type information. On receiving, the receiving client reads the size and type information and provides the whiteboarding document to a whiteboarding application before it can be opened in a receive chat window.

### BRIEF DESCRIPTION OF THE DRAWINGS

A better understanding of the invention is obtained when the following detailed description is considered in conjunction with the following drawings in which:
FIG. 1 is a block diagram of a telecommunications system according to an embodiment of the present invention;
FIG. 2 is a block diagram of an exemplary telecommunications client according to an embodiment of the present invention;
FIG. 3A and FIG. 3B are more detailed block diagrams of telecommunications clients according to embodiments of the present invention;
FIG. 4 is a block diagram of an exemplary telecommunications server according to an embodiment of the present invention;
FIG. 5 is a diagram illustrating an exemplary graphical user interface according to an embodiment of the present invention;
FIG. 6 is a flow diagram illustrating operation of an embodiment of the present invention;
FIG. 7 is a flow diagram illustrating operation of an embodiment of the present invention;
FIG. 8 is a diagram illustrating signaling according to an embodiment of the present invention;
FIG. 9 is a diagram illustrating an exemplary graphical user interface according to an embodiment of the present invention;
FIG. 10 is a diagram illustrating an exemplary data element according to an embodiment of the present invention;
FIG. 11 is a flow diagram illustrating operation of an embodiment of the present invention;
FIG. 12 is a diagram illustrating signaling according to an embodiment of the present invention
FIG. 13 is a block diagram of an MCU according to an embodiment of the present invention;
FIG. 14A and FIG. 14B are diagrams illustrating signaling according to embodiments of the present invention; and
FIG. 15 is a diagram illustrating signaling according to an embodiment of the present invention.

### DETAILED DESCRIPTION OF THE INVENTION

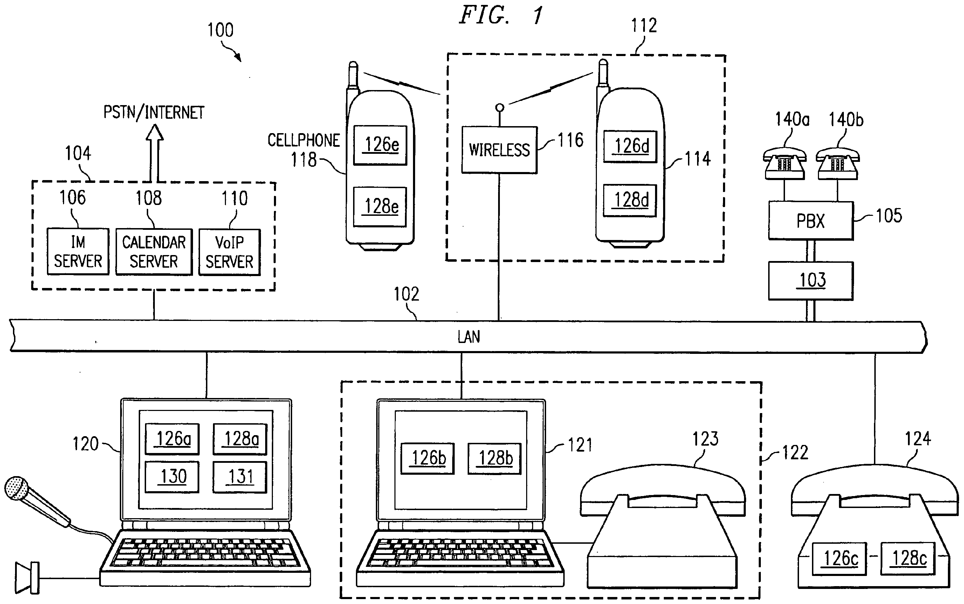

Turning now to the drawings and, with particular attention to FIG. 1, a diagram of a telecommunications system 100 according to an embodiment of the present invention is shown. The telecommunications system 100 includes a packet network such as a LAN 102 to which are coupled a plurality of network devices. In particular, shown are a server 104, which includes an Instant Messaging server 106, a calendar server 108, and a telephony server 110. In the embodiment illustrated, the server 104 couples to the Public Switched Telephone Network (PSTN) or Internet. The server 104 may also include gateway and gatekeeper, as well as multipoint control unit functionality. It is noted that, while a single server 104 is shown, the server functionality may also be implemented using a plurality of individual servers coupled to the LAN 102. Thus, the figures are exemplary only.

The telecommunications system also includes a plurality of network clients, which may be implemented in a variety of configurations. For example, shown are a wireless telephone 112, including a cordless base station 116 and a handset 114; a cellular telephone 118, which couples in through a cellular network (not shown) and the PSTN; a LAN telephone 124; a computer 120 implementing a telephony application program; and a network client 122 implementing a CTI (computer-telephony integration) type system, including a computer 121 and a coupled telephone 123.

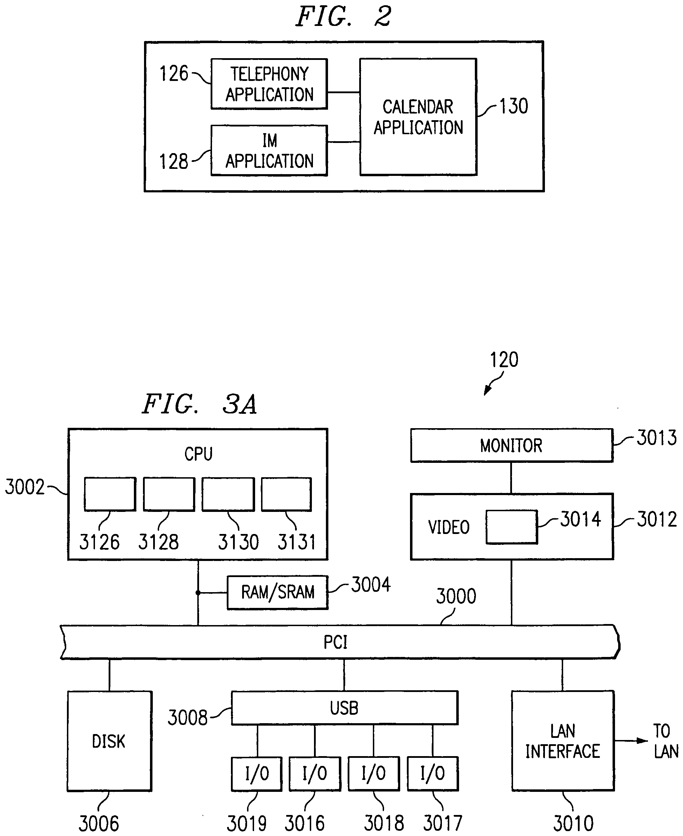

The network clients 120, 122, 124, 118, 112 implement telephony sub-clients 126a-126e, respectively, and Instant Messaging sub-clients 128a-128e, respectively, as will be explained in greater detail below. More particularly, as shown in FIG. 2, each illustrated network client includes a telephony sub-client 126, an Instant Messaging sub-client 128, and a calendaring application 130. A client 120 may also implement a graphical user interface 131. In operation, the telephony sub-client or application 126 provides telephone functionality according to the appropriate standard for each device, e.g., an IP telephony standard for transmittal on the LAN 102. For example, in some embodiments, the telephony sub-clients 126 implement the H.323 Recommendation or the Session Initiation Protocol (SIP), although other packet multimedia protocols may be employed. The Instant Messaging sub-clients 128 implement an appropriate Instant Messaging standard. As noted above, suitable Instant Messaging standards include the Netscape AOL Instant Messenger, AT&T Instant Messenger, Yahoo! Pager, or Microsoft Instant Messenger. The calendar application 130 functions with the calendaring server 108, such as Microsoft Exchange server, to schedule teleconferences and chat sessions, as will be explained in greater detail below. Suitable calendar software includes Microsoft Outlook.

Also coupled to the LAN 101 may be a telephony feature access server or device 103 which couples the LAN 101 to a PBX 105, such as a Hicom PBX. A variety of PBX telephony devices 140a, 140b may also couple to the PBX 105. Devices on the network 102 may be configured to obtain their telephony services through the PBX 105 via the TFA 103. An exemplary telephony feature access server is the Hicom Feature Access server, available from Siemens Corp., and employing the Cornet protocol. In certain embodiments, the TFA 103 may be equipped with Instant Messaging, calendaring, and VoIP capabilities in accordance with the present invention, either as a server or a network device. In what follows, for sake of simplicity, the description will focus primarily on the server 104, it being understood that the teachings of the present invention are equally applicable to the TFA 103..

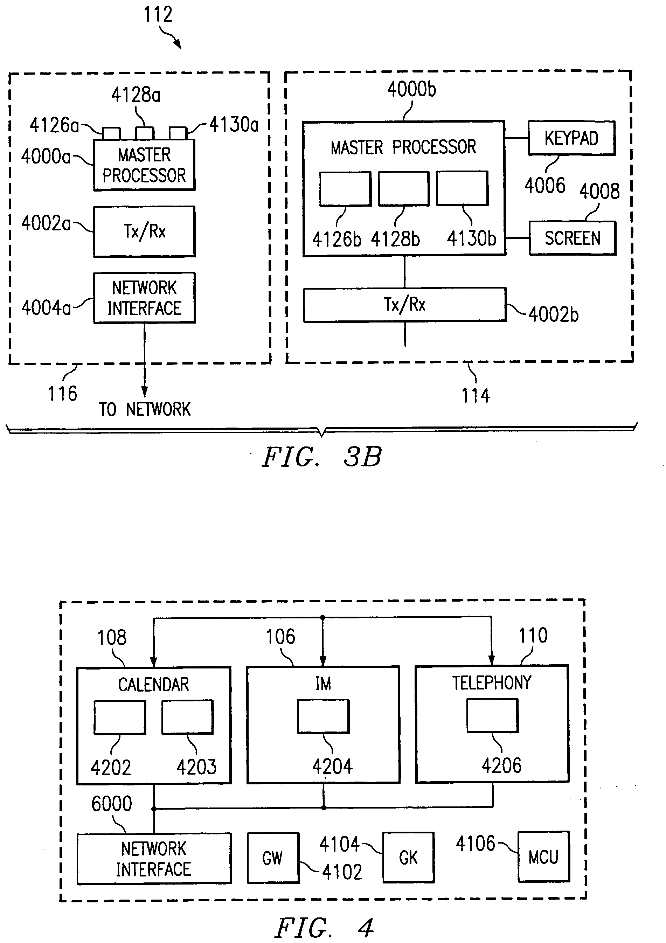

FIG. 3A and FIG. 3B are block diagrams of exemplary network clients according to embodiments of the present invention. In particular, the client 120 of FIG. 3A is exemplary of a personal computer coupled to the network via a network interface card (or wireless network interface card). As shown, the network client 120 includes a bus 3000, such as a PCI bus. Coupled to the bus 3000 are one or more processors 3002; memory 3004, such as RAM or SRAM; a disk drive 3006; one or more Universal Serial Bus interfaces 3008; a video interface 3012; and a LAN interface 3010.

The processor 3002 may be implemented as any of a variety of processors or controllers, including one or more x86 or Pentium-type processors and/or one or more digital signal processors. The processor 3002 implements an IM client 3126, a telephony client 3128, and a calendar client 3130, according to the present invention. The software for implementing the clients may be stored on the disk drive 3006 and memory 3004 in a known manner. The video interface 3012 may couple to a monitor 3013 and display a graphical user interface 3014 executable by the processor 3002 for use with the software clients. The USB interface(s) 308 interface to I/O devices, such as microphone 3016, speaker(s) 3018 and a keyboard 3017 and/or cursor input device 3019. The processor may also implement a graphical user interface 3131, as will be described in greater detail below.

Finally, as noted above, a network interface 3010 interfaces the network client to a network, such as a local area network (LAN). The network interface 3010 may be implemented as a wireless or wired interface. It is noted that the network client 122 (FIG. 1) is generally similar, though the telephone functionality is provided by the coupled telephone 123 rather than the software client.

FIG. 3B illustrates another embodiment of the network client and, particularly, a wireless client 112. The wireless client 112 may be embodied, for example, as any wireless telephone system, including a DECT system or other system functioning, for example, in the 2.4 GHz range. The network client 112 includes a base station 116 and one or more handsets or portable units 114. For convenience, only one such handset 114 is shown.

The base station 116 includes a master processor 4000a, a transceiver 4002a, and a network interface 4004a. In certain embodiments, both the base station 114 and the handset 116 may be used to make telephone calls. Thus, the master processor may implement an IM client 4126a, a telephony client 4128a, and a calendar client 4130a according to embodiments of the present invention. Typically, the clients are implemented as programs stored in memory (not shown). In such an embodiment, the base station 114 will also include a display (not shown), such as an LCD display, and a keypad (not shown). In other embodiments, the base station 114 is not used directly for user interaction and thus does not include a display or full IM client, telephony client and calendar client functionality.

The transceiver 4002a functions to implement coding and decoding and generally to communicate with the handsets 114. The network interface 4004a interfaces the network client 112 to the network. Thus, the network interface may be a local area network interface.

The handset 114 includes a master processor 4000b, a transceiver 4002b, a keypad 4006, and a display 4008. It is noted that in certain embodiments, the keypad is implemented as a "virtual" touch screen on the display 4008. Thus the figure is exemplary only. The display is used to implement a graphical user interface for IM, telephony and calendar functionality, as will be explained in greater detail below.

The master processor 4000b includes a IM client 4126b, a telephony client 4128b, and a calendar client 4130b, as will be explained in greater detail below. Typically, the clients are implemented as programs stored in memory (not shown).

As will be explained in greater detail below, in operation, the user can use the keypad and screen 4006, 4008 to set a date and parties for a conference. The network server 104 then acts to set up and coordinate the conference

It is noted that a cellular telephone or PDA 118 according to embodiments of the present invention is configured generally similarly. Typical cellular telephone standards include GSM and IS-136 TDMA.

FIG. 4 is a block diagram of an exemplary network server according to an embodiment of the present invention. As shown, the server includes an IM server 106, a calendar server 108, and a telephony server 110. The server further includes on or more network interfaces 6000 for interfacing the servers to the local area network.

The calendar server 108 implements a central calendar application 4202 which is used to schedule teleconferences from network clients.
The calendar server 108 thus further includes a memory 4203 for storing configuration information, such as lists of clients, and times of conferences, including the appropriate parties. In operation, the calendar application 4202 receives a request for a conference and stores the date and parties in the memory. The conference is then communicated to the IM server 106 and the telephony server 110.

The IM server 106 likewise includes a memory 4204 for storing configuration information and for receiving "buddy" lists from IM clients. In operation, the IM client activates chat sessions among at least a subset of the parties to the teleconference, in some embodiments, receiving messages and retransmitting them to other chat parties.

The telephony server 110 also includes a memory 4206 for storing configuration information and calling and called party information. In operation, the telephony server receives the conference appointment time from the calendar server 108 and, at the appointed time, either arranges the system for the conference or transmits a request to the host user to begin the conference.

In addition, the server may include gateway 4102 and gatekeeper functionality 4104 (in an embodiment employing H.323), as well as multipoint control unit (MCU) 4106 functionality. Finally, while illustrated as a single server, each of the IM server, calendar server, and the telephony server, and the various other components, could be implemented as discrete units. Thus, the figure is exemplary only.

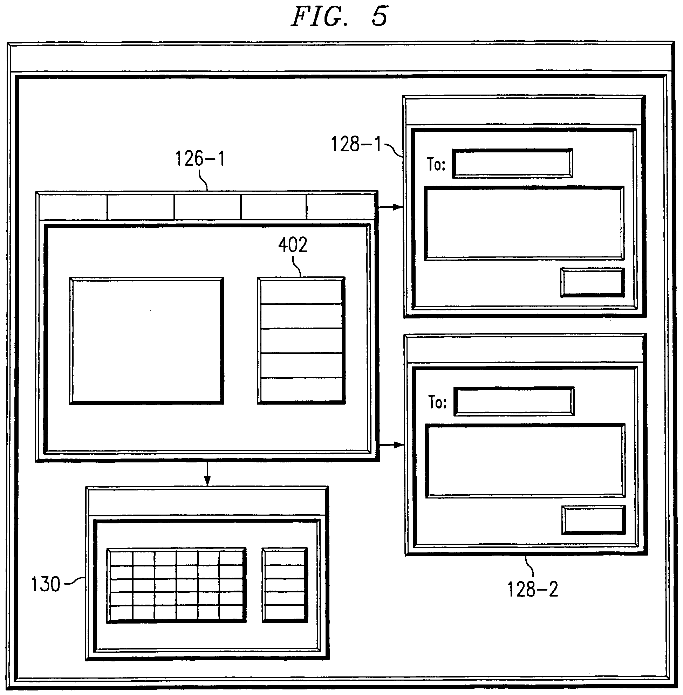

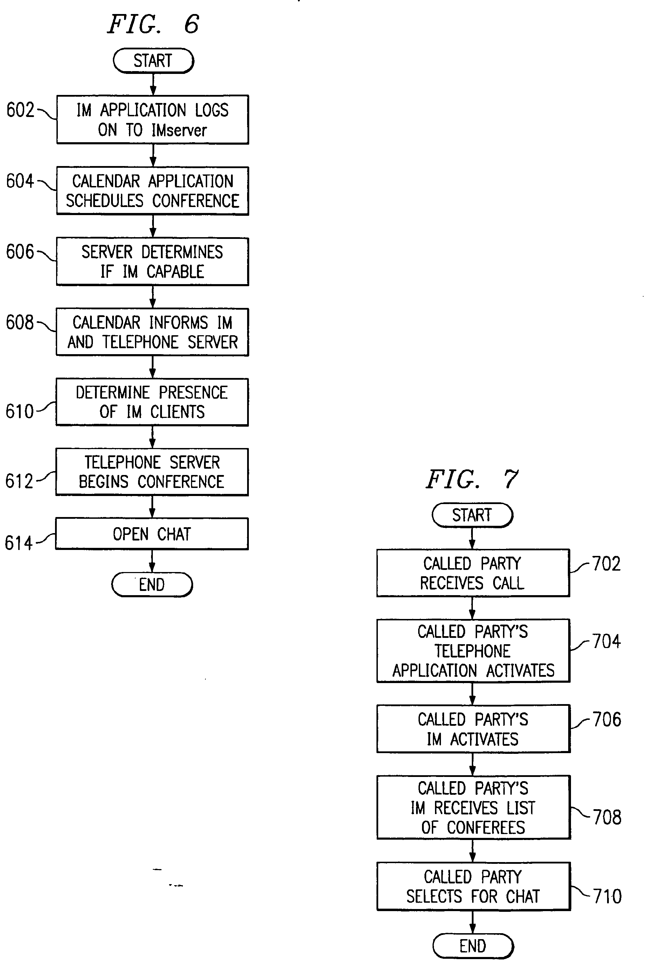

Operation of an embodiment of the present invention is explained with reference to FIG. 5 and FIG. 6. In the discussion that follows, network client 120 shall be referred to, it being understood that the teachings of the present invention are equally applicable to the other network clients and their functionality generally similar.

As shown in FIG. 5, the telephony client 126, the instant messaging client 128, and the calendar application 130 may be implemented including a graphical user interface. In operation, the user may activate one or more instant messaging windows 128-1, 128-2 and one or more calendar windows 130. In a typical embodiment, the calendar application 130 and the instant messaging windows 128-1, 128-2 are opened from within the telephony application 126-1. Thus, these applications may form an integrated part of the telephony application, or may be implemented using plug-ins. In other embodiments, these applications may be implemented using separate applications that are nonetheless adapted to communicate with one another. In still other embodiments, the calendar application or the instant messaging applications may be opened first, and the other applications from them. In the embodiment illustrated, the application further includes an address book or buddy list 402.

FIG. 6 is a flow diagram illustrating operation of an embodiment of the present invention. As shown, in 602, the IM application 128 is used to log on and provide a buddy list to the IM server 106. In 604, the calendar application 130 is used to schedule a teleconference using the calendar server 108. For example, the user may set a date and identify the parties to the teleconference, and the parties may be informed of the time of the conference. At 606, the server determines if the parties to the teleconference have IM capability. It is noted that in certain embodiments, the party information may be handed off to the IM server 106 or the telephony server 110 for them to make this determination. In 608, the calendar server 108 informs the IM server and the telephony server of the conference. This can occur at or before the scheduled time of the conference; and may occur before step 606. At 610, the IM server determines a presence of IM clients, at the time of the conference. At 612, the telephony server 110 begins the conference by calling all parties, i.e., by communicating with the telephone clients. At 614, the chat channels are opened.

It is noted that, in certain embodiments, at the time of the conference, the party who called the conference may be contacted by the calendar server (e.g., via a pop up message box) and given the option of starting the conference or delaying it (i.e., if not all participants are present.).

FIG. 7 is a flowchart illustrating handling when a user or network client receives a conference call in embodiments of the present invention. In a step 702, the called party receives the call, i.e., a call request and call setup signaling. In step 704, the called party's telephony application activates and proceeds with appropriate handshake signaling to establish the call. In step 706, the called party's IM application activates. For example, this may occur automatically, or the called party may manually click on an associated IM icon. In 708, the called party's IM application receives the list of participants to the conference. Finally, in step 708, the called party can select from the list to establish a chat session with various of the participants.

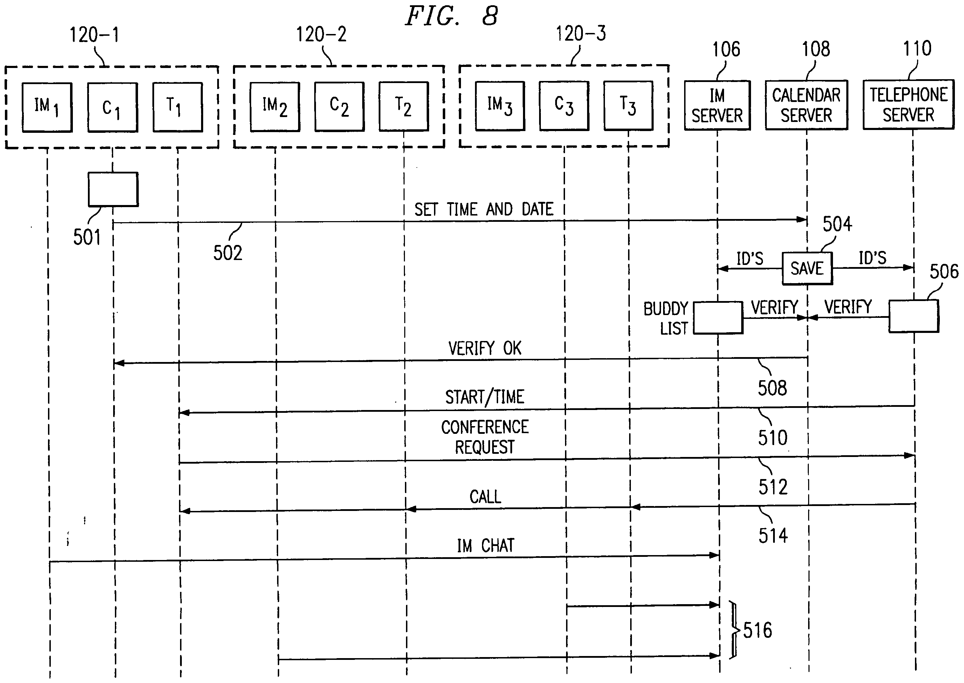

Turning now to FIG. 8, a diagram illustrating operation of an embodiment of the invention in greater detail is shown. Shown are a plurality of network clients 120-1, 120-2, 120-3, an IM server 106, a calendar server 108, and a telephony server 110. The network client 120-1 includes an IM application IM1, calendar application C1, and telephony application T1; the network client 120-2 includes an IM application IM2, calendar application C2, and telephony application T2; and the network client 120-3 includes an IM application IM3, calendar application C3, and telephony application T3.

In the example illustrated, it is assumed that the conference is set up at the behest of the user of network client 120-1. Initially, at 501, the user at network client 120-1 activates his calendar application C1 to set a time and date for the teleconference. As noted above, any calendar application may be used. One such application is Microsoft Outlook. At 502, the time and date are then uploaded to the calendar server 108. A suitable calendar server is the Microsoft Exchange server.

In certain embodiments, the identity of the other parties to the conference is also uploaded to the server. Thus, in 504, the calendar server 108 saves the time, date and the party information. At 506, the IM server 106 and the telephony server 110 may verify the parties identified.

Next, in 508, the calendar server 108 sends an acknowledgement to the calendar application C1 that set the conference. At 510, the calendar server 108 sends a message to the network client at the conference time, indicating that the conference is to begin. In response, at 512, the telephony client T1 sends a conference request message to the telephony server 110. At 514, the telephony server responds to set up the call to the originator and the other telephony clients T2, T3. The teleconference would typically be implemented in a multicast mode. The instant messaging client IM1 then logs on to the instant messaging server 106, at 514. Then, at 516, the other instant messaging applications of parties to the conference log in. The users are then able to maintain a chat session with other parties while the teleconference is ongoing.

It is noted that, in certain embodiments, the calendar application C1 informs the other applications IM1 and T1 of the time and scheduling of the conference. The telephony application T1 and the IM client IM1 then begin the conference at the appointed time.

In certain embodiments of the present invention, signaling for a teleconference may be provided over the instant messaging channel. For example, in one embodiment, the instant messaging channel and system may be used to convey "whiteboarding" documents. "Whiteboarding documents" is a generic term for word processing, spreadsheet, presentation, or similar documents that may be used in a conference and "marked up" by various of the parties to the conference. In such an embodiment, the user can "drag" the whiteboard document to the Instant Messaging window, have the document converted into an Instant Messaging transmission format, sent along the Instant Messaging channel, and received and displayed at the other end. Typically, the document will be "intercepted" before the Instant Messaging window tries to open it, such that it can be displayed in the appropriate application's window.

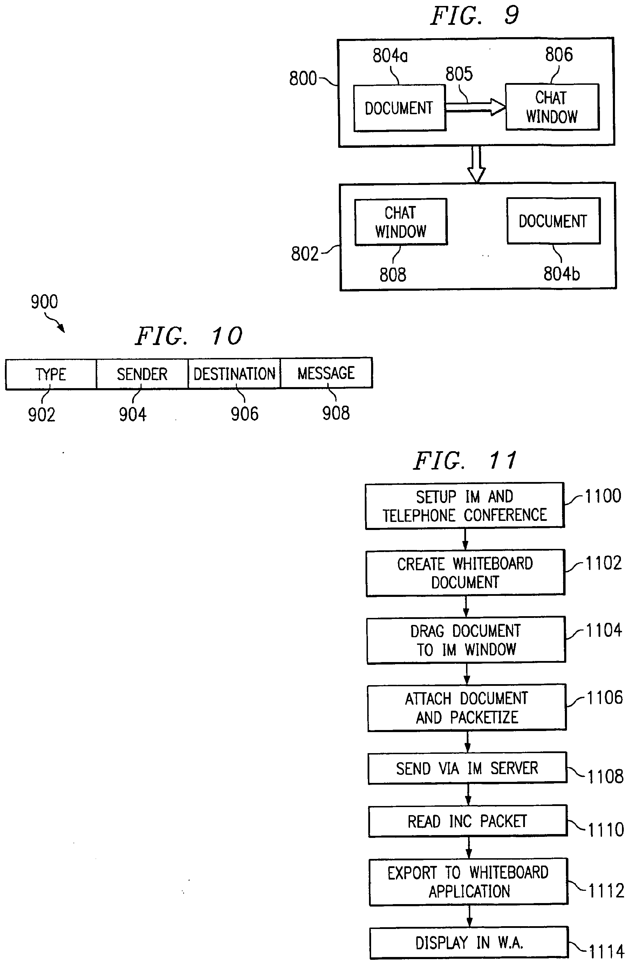

For example, FIG. 9 illustrates a GUI 800 having a whiteboarding document 804a and a chat or instant messaging window 806. The user drags the document into the chat window, as represented by the arrow 805. In GUI 802, representative of a receiving client, the chat window 808 is shown, with the newly received document 804b in its own window.

In operation, the whiteboarding document is packaged into an instant messaging format for transmission on the instant messaging channel. A protocol element identifies the packets as belonging to a whiteboarding application. One such protocol element is shown in FIG. 10. As shown, the element 900 includes a type field 902, a sender field 904, a destination field 906, and a message or payload field 908. The type field 902 identifies the package as belonging to a whiteboarding application and allows the receiving Instant Messaging application to port the received document to the appropriate application program.

FIG. 11 is a flow diagram illustrating operation of an embodiment of the present invention. At 1100, a teleconference including Instant Messaging is set up, for example, in the manner described above. In step 1102, a user creates a whiteboarding document, for example, through use of a word processing or spreadsheet application. At step 1104, the user drags the document to the chat window of the Instant Messaging application. At step 1106, the Instant Messaging application identifies the type of document and packages it into the Instant Messaging transmission format. At step 1108, the document is sent to the destination via the Instant Messaging server. At step 1110, the document is received and the packet type is read by the Instant Messaging application. Because the Instant Messaging application identifies the document as a whiteboarding document, it is exported to the appropriate application at 1112. Finally, at 1114, the document is displayed in the appropriate application window.

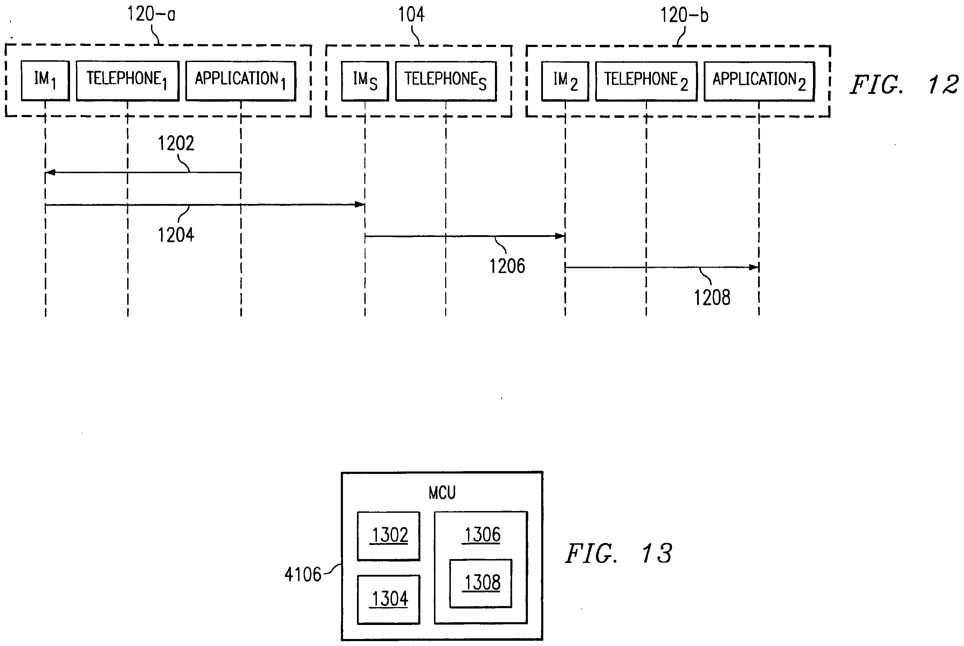

Turning now to FIG. 12, a signaling diagram illustrating operation of an embodiment of the present invention is shown. Shown are a client 120a, a client 120b, and a server 104. The client 120a includes an Instant Messaging application IM1, a telephony application T1, and a whiteboarding application A1. Similarly, the client 120b includes an Instant Messaging application IM2, a telephony application T2, and a whiteboarding application A2. The server 104 includes an Instant Messaging server IMS and a telephony server Ts.

At 1202, the application document is loaded from the application A1 to the Instant Messaging program IM1. At 1204, the Instant Messaging program IM1 sends the document to the Instant Messaging server IMs. At 1206, the Instant Messaging server sends the document to the destination Instant Messaging application IM2. The Instant Messaging application IM2 then reads the header information and transfer the document to the application A2, at 1208. The document can then be marked up by the client at 120b and sent back.

In certain embodiments of the present invention, the multipoint control unit (MCU) 4106 (FIG. 4) may itself be a party to the IM session. As noted above, the MCU 4106 may be implemented as a unit of the server or as a standalone unit. Such an exemplary MCU 4106 is shown in FIG. 13. The MCU 4106 includes a multipoint controller 1302, a multipoint chat engine 1304, and one or more memories 1306. The multipoint controller 1302 functions to implement a multicast protocol, such as the IP multicast protocol or other multicast technique. The memory 1306 is used to store configuration information, and the like.

In operation, the MCU 4106 may be added as a party to the IM session automatically upon the start of the conference by the server. The MCU 4106 may then be able to respond to requests from users sent during the chat. For example, the MCU 4106 may automatically respond to requests, such as "Identify parties", to which the MCU 4106 responds by sending an IM message back with the list of parties. Similarly, a party to the conference could send an IM message, "Please call 555-1111," whereupon the MCU 4106 would respond by calling the number.

To do so, the memory 1306 may be used to store one or more configuration tables 1308 of commands and actions to be undertaken in response. When a chat message is received by the MCU 4106, the contents of the message are perused by the IM engine 1304 to determine if an actionable command is contained therein. To read a command in a chat message, the IM chat engine 1304 can be implemented in a variety of ways. For example, the text message may include a command prefix or may simply include a predetermined text sequence. If a command is identified, then the action is carried out by the MCU controller 1302.

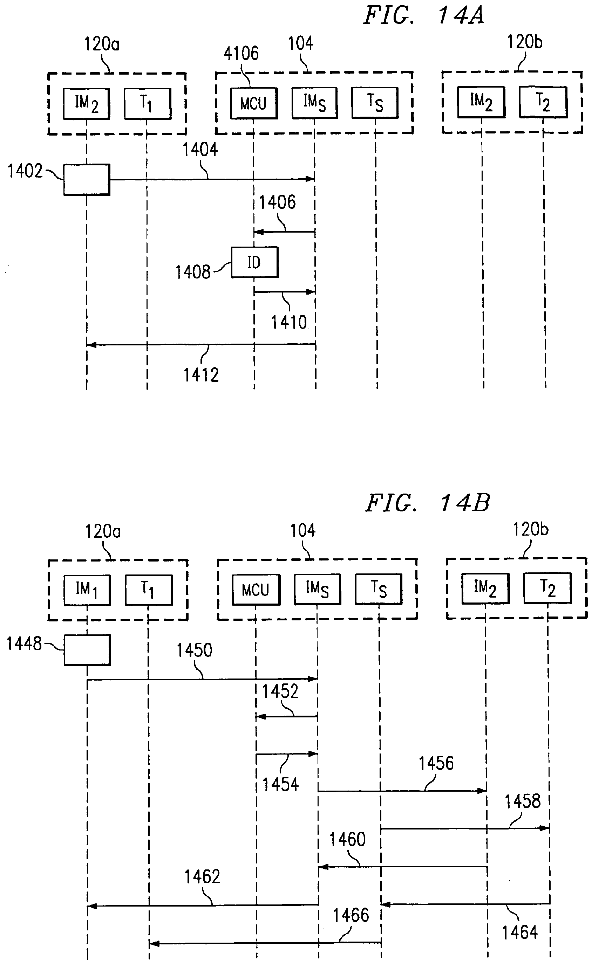

A signaling diagram illustrating operation of an MCU according to an embodiment of the present invention is shown in FIG. 14A. In particular, shown is signaling for execution of the identification command described above. Shown are a client 120a, a client 120b, and a server 104. The client 120a includes an Instant Messaging application IM1 and a telephony application T1. Similarly, the client 120b includes an Instant Messaging application IM2 and a telephony application T2. The server 104 includes an Instant Messaging server IMS and a telephony server Ts, as well as an MCU 4106. It is noted that the MCU 4106 could form a part of a separate network entity.

At 1402, the user types in the Identify command into the Instant Messaging window. At 1404, the Instant Messaging application recognizes the entry as a functional command and transmits it to the Instant Messaging server Ims. At 1406, the Instant Messaging server. Ims likewise receives and decodes the command, sending it to the MCU 106. At 1408, the MCU identifies the parties to the conference, and sends the information to the Instant Messaging server at 1410. Finally, at 1412, the Instant Messaging server IMS sends the information to the requesting party.

A signaling diagram illustrating operation of an MCU according to an embodiment of the present invention is shown in FIG. 14B. In particular, shown is the signaling for using the MCU as party to the chat session to call another party. Shown are a client 120a, a client 120b, and a server 104.
The client 120a includes an Instant Messaging application IM1 and a telephony application T1. Similarly, the client 120b includes an Instant Messaging application IM2 and a telephony application T2. The server 104 includes an Instant Messaging server IMS and a telephony server Ts, as well as an MCU 106.

At 1448, the user types in the Call command in the instant messaging window. At 1450, the Instant Messaging application IM1 sends the command to the server Ims. At 1452, the Instant Messaging server IMS sends the command to the MCU. At 1454, the MCU reads the command and directs the Instant Messaging server to start a chat with the Instant Messaging application IM2 1456 and a telephone connection at 1458. The Instant Messaging destination application IM2 and telephone application T2 are connected to the servers at 1460, 1464, respectively. The applications at client 120a are connected at 1462, 1466.

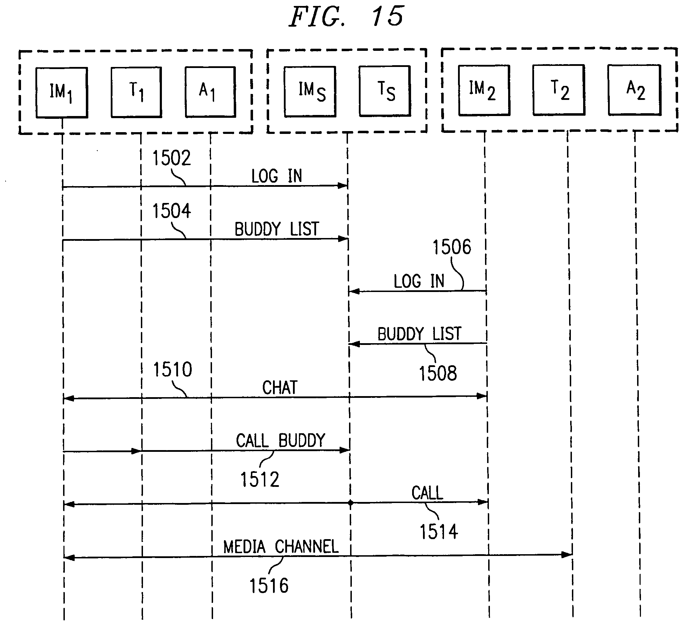

While an Instant Messaging channel can be used for whitebaording applications, or via the MCU for call signaling purposes, the Instant Messaging channel can also be used for initial teleconference signaling. Shown in FIG. 15 is signaling for such an embodiment. Shown are a client 120a, a client 120b, and a server 104. The client 120a includes an Instant Messaging application IM1 and a telephony application T1. Similarly, the client 120b includes an Instant Messaging application IM2 and a telephony application T2. The server 104 includes an Instant Messaging server IMS and a telephony server Ts.

At 1502, the Instant Messaging application IM1 logs in to the Instant Messaging server Ims, and sends its buddy list at 1504. Similarly, the Instant Messaging application IM2 logs in at 1506 and sends its buddy list at 1508. The chat is opened between the parties at 1510.

Next, if it desired to open a telephone call, the user at client 120a can type in or otherwise enter a command in the Instant Messenger application to call the party with whom the user is chatting. The command is sent to the Instant Messaging server IMS at 1512. The Instant Messaging server reads the command and sends it to the telephony server TS, which then calls the parties, at 1514. Finally, at 1516, the media channel is opened.

The invention described in the above detailed description is not intended to be limited to the specific form set forth herein, but is intended to cover such alternatives, modifications and equivalents as can reasonably be included within the scope of the appended claims.

## Claims

1. A telecommunications method comprising the step of
establishing an instant messaging session among a plurality of network clients (112, 118, 120, 122, 124) operably coupled to a packet network (102), including a plurality of telephony clients (126a, 126b, 126c, 126d, 126e) and an associated plurality of Instant Messaging clients (128a, 128b, 128c, 128d, 128e); the packet network (102) comprising a teleconferencing server (110) operably coupled to the packet network and an Instant Messaging server (106) operably coupled to the packet network (102);
**characterized by** the following steps:
using an instant messaging channel of the instant messaging session adapted to provide signaling control and to carry signaling to establish a multimedia conference over IP session among a plurality of telephony clients (126a, 126b, 126c, 126d) of the network clients (112, 118, 120, 122, 124) and wherein said multimedia over IP session comprises establishing an initial multimedia conference;
carrying telephony call setup and telephony signaling over the instant messaging channel;
wherein said multimedia conference over IP session comprises a whiteboarding session during a pre-established multimedia session.

2. A telecommunications method in accordance with claim 1, wherein said whiteboarding session comprises sending a whiteboarding document in a chat window of said instant messaging session.

3. A telecommunications method in accordance with claim 2, wherein sending said whiteboarding document comprises identifying said whiteboarding document as a whiteboarding document and including size and type information.

4. A telecommunications method in accordance with claim 3, wherein receiving said whiteboarding document comprises reading said size and type information and providing said whiteboarding document to a whiteboarding application before opening said whiteboarding document in a receive chat window.

5. A telecommunications device comprising:
a network client (112, 118, 120, 122, 124) operably coupled to a packet network (102), including a telephony client (126a, 126b, 126c, 126d, 126e),
and adapted to establish an instant messaging session among a plurality of packet network clients (112, 118, 102, 122, 124),
an Instant Messaging client (128a, 128b, 128c, 128d, 128e), said Instant Messaging client adapted to provide signaling control and to carry signaling to establish a multimedia over IP session over an Instant Messaging channel for said multimedia packet client and to establish an initial multimedia conference, wherein said Instant Messaging channel carrying telephony call setup and telephony signaling and
wherein said signaling control comprises providing signaling control for a whiteboarding document to be sent during a pre-established multimedia session.

6. A telecommunications device in accordance with claim 5, wherein sending a whiteboarding document comprises sending said whiteboarding document in a chat window of said instant messaging session.

7. A telecommunications device in accordance with claim 6, wherein sending said whiteboarding document comprises identifying said whiteboarding document as a whiteboarding document and including size and type information.

8. A telecommunications device in accordance with claim 7, wherein receiving said whiteboarding document comprises reading said size and type information and providing said whiteboarding document to a whiteboarding application before opening said whiteboarding document in a receive chat window.

9. A telecommunications system comprising:
a packet network (102);
a plurality of network clients (112, 118, 120, 122, 124) operably coupled to said network, said network clients including a plurality of telephony clients (126a, 126b, 126c, 126d, 126e) and an associated plurality of Instant Messaging clients (128a, 128b, 128c, 128d, 128e);
a teleconferencing server (110) operably coupled to said packet network; and
an Instant Messaging server (106) operably coupled to said packet network;
said network clients are adapted to establish an instant messaging session among a plurality of packet network clients (112, 118, 120, 122, 124), wherein telephony call setup and telephony signaling for said telephony clients (126a, 126b, 126c, 126d, 126e) are adapted to be provided by said Instant Messaging clients (128a, 128b, 128c, 128d, 128e) over an associated Instant Messaging channel;
wherein said signaling comprises set up signaling control for a multimedia over IP session and wherein said multimedia over IP session comprises establishing an initial multimedia conference; and
wherein said multimedia conference over IP session comprises a whiteboarding session during a pre-established multimedia session.

## Patentansprüche

1. Telekommunikationsverfahren, umfassend den Schritt des Herstellens einer Instant-Messaging-Sitzung aus einer Vielzahl von Netzwerk-Clients (112, 118, 120, 122, 124), die funktionell mit einem Paket-Netzwerk (102) verbunden sind, einschließlich einer Vielzahl von Telefonie-Clients (126a, 126b, 126c, 126d, 126e) und einer zugehörigen Vielzahl von Instant-Messaging-Clients (128a, 128b, 128c, 128d, 128e); wobei das Paket-Netzwerk (102) einen Telekonferenz-Server (110), der funktionell mit dem Paket-Netzwerk verbunden ist, und einen Instant-Messaging-Server (106), der funktionell mit dem Paket-Netzwerk (102) verbunden ist, umfasst;
durch die folgenden Schritte gekennzeichnet:
Verwenden eines Instant-Messaging-Kanals der Instant-Messaging-Sitzung, der so ausgelegt ist, dass er Signalisierungssteuerung bereitstellt und Signalisierung trägt, um eine Multimediakonferenz-über-IP-Sitzung aus einer Vielzahl von Telefonie-Clients (126a, 126b, 126c, 126d) der Netzwerk-Clients (112, 118, 120, 122, 124) herzustellen, wobei die Multimedia-über-IP-Sitzung Herstellen einer ersten Multimediakonferenz umfasst;
Tragen von Telefonie-Verbindungsaufbau und Telefonie-Signalisierung über den Instant-Messaging-Kanal;
wobei die Multimediakonferenz-über-IP-Sitzung eine Whiteboarding-Sitzung während einer vorbestimmten Multimediasitzung umfasst.

2. Telekommunikationsverfahren nach Anspruch 1, wobei die Whiteboarding-Sitzung Senden eines Whiteboarding-Dokuments in einem Chat-Fenster der Instant-Messaging-Sitzung umfasst.

3. Telekommunikationsverfahren nach Anspruch 2, wobei Senden des Whiteboarding-Dokuments Ermitteln des Whiteboarding-Dokuments als ein Whiteboarding-Dokument und Einbeziehen von Größen- und Typeninformationen umfasst.

4. Telekommunikationsverfahren nach Anspruch 3, wobei Empfangen des Whiteboarding-Dokuments Lesen der Größen- und Typeninformationen und Bereitstellen des Whiteboarding-Dokuments in einer Whiteboarding-Anwendung vor Öffnen des Whiteboarding-Dokuments in einem Chat-Empfangsfenster umfasst.

5. Telekommunikationsvorrichtung, Folgendes umfassend:
einen Netzwerk-Client (112, 118, 120, 122, 124), der funktionell mit einem Paket-Netzwerk (102) verbunden ist, einschließlich eines Telefonie-Clients (126a, 126b, 126c, 126d, 126e),
und so ausgelegt ist, dass er eine Instant-Messaging-Sitzung aus einer Vielzahl von Paket-Netzwerk-Clients (112, 118, 102, 122, 124) herstellt,
einen Instant-Messaging-Client (128a, 128b, 128c, 128d, 128e), wobei der Instant-Messaging-Client so ausgelegt ist, dass er Signalisierungssteuerung bereitstellt und Signalisierung trägt, um eine Multimedia-über-IP-Sitzung über einen Instant-Messaging-Kanal für den Multimedia-Paket-Client herzustellen und um eine erste Multimediakonferenz herzustellen, wobei der Instant-Messaging-Kanal Telefonie-Verbindungsaufbau und Telefonie-Signalisierung trägt und
wobei die Signalisierungssteuerung Bereitstellen von Signalisierungssteuerung für ein Whiteboarding-Dokument umfasst, das während einer vorbestimmten Multimedia-Sitzung gesendet werden soll.

6. Telekommunikationsvorrichtung nach Anspruch 5, wobei Senden eines Whiteboarding-Dokuments Senden des Whiteboarding-Dokuments in einem Chat-Fenster der Instant-Messaging-Sitzung umfasst.

7. Telekommunikationsvorrichtung nach Anspruch 6, wobei Senden des Whiteboarding-Dokuments Ermitteln des Whiteboarding-Dokuments als ein Whiteboarding-Dokument und Einbeziehen von Größen- und Typeninformationen umfasst.

8. Telekommunikationsvorrichtung nach Anspruch 7, wobei Empfangen des Whiteboarding-Dokuments Lesen der Größen- und Typeninformationen und Bereitstellen des Whiteboarding-Dokuments in einer Whiteboarding-Anwendung vor Öffnen des Whiteboarding-Dokuments in einem Chat-Empfangsfenster umfasst.

9. Telekommunikationssystem, Folgendes umfassend:
ein Paket-Netzwerk (102);
eine Vielzahl von Netzwerk-Clients (112, 118, 120, 122, 124), die funktionell mit dem Netzwerk verbunden sind, wobei die Netzwerk-Clients eine Vielzahl von Telefonie-Clients (126a, 126b, 126c, 126d, 126e) und eine zugehörige Vielzahl von Instant-Messaging-Clients (128a, 128b, 128c, 128d, 128e) umfassen;
einen Telekonferenz-Server (110), der funktionell mit dem Paket-Netzwerk verbunden ist;
einen Instant-Messaging-Server (106), der funktionell mit dem Paket-Netzwerk verbunden ist;
wobei die Netzwerk-Clients so ausgelegt sind, dass sie eine Instant-Messaging-Sitzung aus einer Vielzahl von Paket-Netzwerk-Clients (112, 118, 120, 122, 124) herstellen, wobei Telefonie-Verbindungsaufbau und Telefonie-Signalisierung für die Telefonie-Clients (126a, 126b, 126c, 126d, 126e) so ausgelegt sind, dass sie von den Instant-Messaging-Clients (128a, 128b, 128c, 128d, 128e) über einen zugehörigen Instant-Messaging-Kanal bereitgestellt werden;
wobei die Signalisierung Aufbau von Signalisierungssteuerung für eine Multimedia-über-IP-Sitzung umfasst und wobei die Multimedia-über-IP-Sitzung Herstellung einer ersten Multimediakonferenz umfasst; und
wobei die Multimediakonferenz-über-IP-Sitzung eine Whiteboarding-Sitzung während einer vorbestimmten Multimedia-Sitzung umfasst.

## Revendications

1. Procédé de télécommunication comprenant l'étape suivante l'établissement d'une session de messagerie instantanée parmi une pluralité de clients de réseau (112, 118, 120, 122, 124) couplée fonctionnellement à un réseau par paquets (102) comprenant une pluralité de clients de téléphonie (126a, 126b, 126c, 126d, 126e) et une pluralité associée de clients de messagerie instantanée (128a, 128b, 128c, 128d, 128e) ; le réseau par paquets (102) comprenant un serveur de téléconférence (110) couplé fonctionnellement au réseau par paquets et un serveur de messagerie instantanée (106) couplé fonctionnellement au réseau par paquets (102) ;
**caractérisé par** les étapes suivantes :
l'utilisation d'un canal de messagerie instantanée de la session de messagerie instantanée, adapté pour fournir une commande de signalisation et pour exécuter une signalisation pour établir une session de conférence multimédia sur IP parmi une pluralité de clients de téléphonie (126a, 126b, 126c, 126d) des clients de réseau (112, 118, 120, 122, 124) et dans lequel ladite session multimédia sur IP comprend l'établissement d'une conférence multimédia initiale ;
l'exécution d'un établissement d'appel de téléphonie et d'une signalisation de téléphonie sur le canal de messagerie instantanée ;
dans lequel ladite session de conférence multimédia sur IP comprend une session de tableau blanc durant une session multimédia préétablie.

2. Procédé de télécommunication selon la revendication 1, dans lequel ladite session de tableau blanc comprend l'envoi d'un document de tableau blanc dans une fenêtre de conversation de ladite session de messagerie instantanée.

3. Procédé de télécommunication selon la revendication 2, dans lequel l'envoi dudit document de tableau blanc comprend l'identification dudit document de tableau blanc comme un document de tableau blanc et l'inclusion d'informations de taille et de type.

4. Procédé de télécommunication selon la revendication 3, dans lequel la réception dudit document de tableau blanc comprend la lecture desdites informations de taille et de type et la fourniture dudit document de tableau blanc à une application de tableau blanc avant l'ouverture dudit document de tableau blanc dans une fenêtre de conversation de réception.

5. Dispositif de télécommunication comprenant :
un client de réseau (112, 118, 120, 122, 124) couplé fonctionnellement à un réseau par paquets (102) comprenant un client de téléphonie (126a, 126b, 126c, 126d, 126e), et adapté pour établir une session de messagerie instantanée parmi une pluralité de clients de réseau par paquets (112, 118, 102, 122, 124),
un client de messagerie instantanée (128a, 128b, 128c, 128d, 128e), ledit client de messagerie instantanée étant adapté pour fournir une commande de signalisation et pour exécuter une signalisation pour établir une session multimédia sur IP sur un canal de messagerie instantanée pour ledit client par paquets multimédias et pour établir une conférence multimédia initiale, dans lequel ledit canal de messagerie instantanée exécute un établissement d'appel de téléphonie et une signalisation de téléphonie et dans lequel ladite commande de signalisation comprend la fourniture d'une commande de signalisation pour un document de tableau blanc à envoyer durant une session multimédia préétablie.

6. Dispositif de télécommunication selon la revendication 5, dans lequel l'envoi d'un document de tableau blanc comprend l'envoi dudit document de tableau blanc dans une fenêtre de conversation de ladite session de messagerie instantanée.

7. Dispositif de télécommunication selon la revendication 6, dans lequel l'envoi dudit document de tableau blanc comprend l'identification dudit document de tableau blanc comme un document de tableau blanc et l'inclusion d'informations de taille et de type.

8. Dispositif de télécommunication selon la revendication 7, dans lequel la réception dudit document de tableau blanc comprend la lecture desdites informations de taille et de type et la fourniture dudit document de tableau blanc à une application de tableau blanc avant l'ouverture dudit document de tableau blanc dans une fenêtre de conversation de réception.

9. Système de télécommunication comprenant :
un réseau par paquets (102) ;
une pluralité de clients de réseau (112, 118, 120, 122, 124) couplée fonctionnellement audit réseau, lesdits clients de réseau comprenant une pluralité de clients de téléphonie (126a, 126b, 126c, 126d, 126e) et une pluralité associée de clients de messagerie instantanée (128a, 128b, 128c, 128d, 128e) ;
un serveur de téléconférence (110) couplé fonctionnellement audit réseau par paquets ; et
un serveur de messagerie instantanée (106) couplé fonctionnellement audit réseau par paquets ;
lesdits clients de réseau sont adaptés pour établir une session de messagerie instantanée parmi une pluralité de clients de réseau par paquets (112, 118, 120, 122, 124), dans lequel un établissement d'appel de téléphonie et une signalisation de téléphonie pour lesdits clients de téléphonie (126a, 126b, 126c, 126d, 126e) sont adaptés pour être fournis par lesdits clients de messagerie instantanée (128a, 128b, 128c, 128d, 128e) sur un canal de messagerie instantanée associé ;
dans lequel ladite signalisation comprend une commande de signalisation d'établissement pour une session multimédia sur IP et dans lequel ladite session multimédia sur IP comprend l'établissement d'une conférence multimédia initiale ; et
dans lequel ladite session de conférence multimédia sur IP comprend une session de tableau blanc durant une session multimédia préétablie.
